# EUROPEAN PATENT SPECIFICATION

(11) **EP 0 653 158 B1**
(45) Date of publication and mention of the grant of the patent: **10.02.1999**
(21) Application number: 94307482.3
(22) Date of filing: 12.10.1994
(51) Int. Cl.: A01N 25/28

(54) **Method for microencapsulation of agriculturally active substances**
Verfahren zur Mikroverkapselung von Agrarchemikalien
Procédé de microencapsulation de substances actives pour l'agriculture

(30) Priority: 12.10.1993 US 133896
(43) Date of publication of application: 17.05.1995
(73) Proprietor: Lignotech USA, Inc., Rothschild, Wisconsin 54474-1198 (US)
(72) Inventor: Lebo, Stuart E., Jr., Schofield, Wisconsin 54476 (US); Detroit, William J., Schofield, Wisconsin 54476 (US)
(74) Representative: Gillam, Francis Cyril

(56) References cited:
- EP-A- 0 025 379
- WO-A-92/19102
- US-A- 4 223 007

## Description

### Field of Invention

The present invention relates to a method for microencapsulating agriculturally active substances and, more specifically, to the production of microencapsulated chemical and/or biological actives having improved resistance to environmental degradation, especially that caused by exposure to ultra-violet (UV) light. Said actives can be any UV sensitive synthetic or natural or biologically derived pesticide.

The use of microencapsulation as a means of controlling the release of actives, of improving handling via reduced toxicity and of improving environmental stability has been documented. Without such protection, the effectiveness of such actives can be drastically reduced by numerous factors including volatilization and degradation caused by exposure to ultra-violet light. By use of the process described herein, the resistance of UV sensitive chemical and/or biological actives to such losses can be greatly reduced.

### Prior Art

A number of microencapsulation systems have been proposed for providing protection of agriculturally active substances.

One method suggested in U.S. Patent No. 3,839,561 utilizes diisophorone derivatives to protect active cyclopropane carboxylic acid compounds from ultra-violet induced degradation. Similarly, U.S. Patent No. 4,094,969 describes the use of a sulfonated copolymer of catechin and leucocyanidin as a UV stabilizer. In both cases, however, the formulations suggested do not maintain the sunscreen and active in close enough contact to be effective.

In U.S. Patent No. 3,242,051, a method for coating materials by phase separation is described. Gelatin and various carboxylated polymers such as gum acacia and ethyl cellulose are used to form the coating. The use of a similar ethylcellulose/gelatin system is described by Ignoffo and Batzer in "Microencapsulation and Ultraviolet Protectants to Increase Sunlight Stability of an Insect Virus", J. of Econ. Entomology, Vol. 64, pp. 850-853 (1966), and the use of a chlorophyll green/gelatin system is described in U.S. Patent No. 2,090,109. In these cases, however, the materials have less than desirable environmental stability. Another disadvantage of these polymers is that they are not always capable of keeping the sunscreening agent within the capsule wall.

Encapsulation of actives by interfacial polycondensation is described in U.S. Patent No. 4,280,833 and 4,417,916. The actives thus formed have a skin or thin wall of polyurea which improves release characteristics and environmental stability. In the process, lignin sulfonate is used as an emulsifier.

The use of lignin in controlled release of actives is also known in prior art. The preparation of controlled release composites of lignin and biologically active materials is described in U.S. Patent No. 3,929,453 (Re. 29,238). The composites described are obtained by coprecipitation-inclusion from an aqueous alkaline lignin solution, or by the elimination of a common solvent from a lignin-biologically active organic agent mixture. Preparation of reversibly swellable lignin gels is described in U.S. Patent Nos. 4,184,866 and 4,244,729. The described gels are formed by crosslinking lignin with epichlorohydrin and are able to sustain the release of water-soluble and water-insoluble pesticides. The use of other crosslinking agents such as formaldehyde and glutaric dialdehyde is described in a related U.S. Patent No. 4,244,728. The use of said gels for UV protection, however, is not disclosed in any of these patents.

The use of sunscreen agents in combination with encapsulation is described in U.S. Patent No 4,844,896. Suggested sunscreen agents include methyl orange, malachite green, methyl green and other colored dyes, and suggested encapsulating agents include Eudragit L, Eudragit S, polyacrylic acid and other polyacrylates. It is claimed that such systems keep the sunscreen agent within the capsule. Incorporation of the sunscreen into the capsule wall is not disclosed, however, and the problem of sunscreen catalyzed degradation is not addressed.

The use of lignin or lignin in combination with polyacrylate materials as an encapsulating agent is described in International Application No. WO-A-92/19102. While lignin is disclosed as a sunscreen in this application, the procedures used to make capsules are complex and require a number of different chemicals.

The first objective of this invention, on the other hand, is to incorporate ultra-violet sunscreens, and more specifically sulfonated lignins, sulfonated lignites, naphthalene sulfonates and other related compounds, directly into the wall of the capsule. Chemical bonds keep the sunscreen agents from diffusing out of the capsule where they are ineffective. A further objective of incorporation of the sunscreen into the capsule wall is to minimize sunscreen catalyzed degradation of sensitive actives.

U.S. Patent No. 4,223,007 describes a process for forming micro-encapsulations in which microbeads are formed of a proteinaceous material, such as gelatin, mixed with a nucleic acid, such as RNA. This however still is based upon interaction of the amine groups in the gelatin (or other proteinaceous material) with carboxyl groups in the RNA or other nucleic acid - and may be contrasted, both technically and economically, with the use of lignosulphonates in accordance with the present invention, as will appear subsequently.

For completeness it may also be mentioned that British Patent No. 1,075,952 long ago described methods of making micro-capsules by causing a material to co-acervate around a nucleus, which material again consists very largely of a polymeric amine so modified as to render it hydrophobic enough to co-acervate from an aqueous sol. by pH adjustment.

Still another objective of the invention is to minimize the number of ingredients needed in the encapsulation procedure, thereby simplifying the overall process.

### Summary of the Invention

The ultra-violet absorbing properties of lignosulfonates such as sulfonated lignins derived from the sulfite pulping of wood or by sulfonation of lignins derived from the kraft pulping of wood, sulfonated lignites derived from the sulfonation of lignite coal, sulfonated tannins derived by the sulfonation of bark tannins, synthetically prepared naphthalene sulfonates and other related compounds are well established. The functionality of the phenolic and other aromatic, carbonyl, catecholic and carboxyl groups contribute to the ability of these types of compounds to absorb UV light.

It has also been established that certain modifications such as high temperature and other types of oxidation and/or azo-coupling as described in U.S. Patent No. 4,846,888 can significantly increase the absorbance of these compounds particularly in the case of lignin sulfonates. It is also well known that compounds of this type can effectively dissipate the energy associated with the absorption of UV light internally thereby preventing transfer to other proximate actives.

Under specific conditions sulfonated lignins and sulfonated tannins react with proteins such as, but not limited to, gelatin to form insoluble compounds. When crosslinked, these complexes have low solubility under acidic or neutral conditions but are soluble in alkaline systems.

Also, under specific conditions proteins and carboxylated compounds such as gum arabic interact to form complexes of limited solubility. This interaction is the basis for microencapsulation of many pharmaceutical materials.

In the present invention, a similar system is used to encapsulate agriculturally active materials. The system employed in the present invention, however, utilizes lignosulfonates (e.g. sulfonated lignin), sulfonated lignite, sulfonated tannins, naphthalene sulfonates and/or other related compounds in combination with a protein such as high bloom gelatin to form the capsule wall. The capsule wall formed by the interaction of these materials is durable and has an ultra-violet protectant as an integral part of its structure. The present invention also has the advantages of requiring minimum amounts of chemicals to produce, it is easy to use and the components of the cell wall are non-toxic and environmentally safe.

According to the present invention there is provided a method for encapsulating an ultra-violet sensitive agriculturally active pesticide in protective capsule wall, comprising the steps of:
i. dissolving a protein and an ultra-violet protectant lignosulfonate, sulfonate lignite, sulfonated tannin, naphthalene sulfonate, condensed naphthalene sulfonate and/or azolignosulfonate, the ultra-violet protectant being in a solution having a pH of 6.0 to 8.5;
ii. mixing a pesticide in said solution to form an emulsion;
iii. acidifying the resulting emulsion to a pH close to the isoelectric point of the protein by controlled addition of acid to form a coacervated mixture containing a protein/ultra-violet protectant complex as a capsule wall;
iv. transferring the coacervated mixture to a chilled water bath and
v. isolating said capsules.

The method preferably also includes the step of hardening the capsule wall prior to isolating said capsules. The step of hardening advantageously comprises adding a crosslinking agent to said chilled water bath, which crosslinking agent is preferably one or more of formaldehyde, acetaldehyde, glyceraldehyde, malonic acid dialdehyde and/or glyoxal. The step of isolating the capsules conveniently comprises filtration.

The method preferably further includes the step of neutralising the coacervated mixture prior to isolating the capsules. The pesticide may be a synthetically-prepared pesticide, a naturally-derived pesticide, and/or a biologically derived pesticide. Specifically the method may advantageously be applied when the pesticide is one or more than one of the following, namely:
- a pyrethroid, and preferably one selected from allethrin, cyfluthrin, cypermethrin, fenothrin, flucythrinate and indothrin; and/or
- an organophosphonate, and preferably one selected from crufomate, dursban, dicrotophos, parathion and phorate; and/or
- pyrethrum; and/or
- a virus, a bacterium, a nematode and/or a fungi, and preferably a nuclear polyhedrosis virus and especially one selected from *Heliothis zea, H. virescens, Lymantrai dispar, Orgai pseudotsufata, Neodiprion sertifer, and Autographa californica*, or selected from *Bacillus cereus*, or selected from *Neoaplectana carpocapsae*, *Octomyomermis muspratti, Steinemema carpocapsae* and *Romanomermis culiciuora*, or selected from *Verticillium lecanii* and/or *Entomophthora* genus.

The protein is desirably one or more of albumin, agar-agar, algen, gluten, casein, fibrin and/or gelatin.

The ultra-violet protectant is preferably one modified to have increased ultra-violet absorbence in the 290-400nm range.

### Brief Description of the Drawings

The drawings illustrate the best mode presently contemplated of carrying out the invention.

In the drawings:
Fig. 1 is a graph of the percent degradation over time of parathion encapsulated with a sulfonated lignin as the UV protectant;
Fig. 2 is a graph of the percent degradation over time of parathion encapsulated with a sulfonated lignite as the UV protectant;
Fig. 3 is a graph of the percent degradation over time of parathion encapsulated with an azo-lignosulfonate as the UV protectant; and
Fig. 4 is a graph of the percent degradation over time of parathion encapsulated with a sulfonated lignin as the UV protectant as compared to parathion emulsified with a sulfonated lignin in a non-encapsulated formulation.

### Detailed Description of the Preferred Embodiment

It has been found that the UV sensitivity of agricultural actives including chemical and biological actives can be greatly reduced by encapsulation according to this invention. Such actives include any UV sensitive synthetic, natural, or biologically derived pesticide. As used herein the term "pesticide" has its normal connotation, and is intended to encompose insecticides, herbicides, fungicides, rodenticides, molluscicides, miticides, ovicides, algicides, larvacides, bactericides, and nematocides. For example, the UV sensitive, agriculturally active agent might be a biologically derived pesticide such as a virus, a bacterium, a nematode or a fungi. Viruses include, but are not limited to, the nuclear polyhedrosis virus (NPV) of the bullworm, Heliothis zea, of the gypsy moth Lymantria dispar, of the Douglas fir tossock moth, Orgia pseudotsugata, of the European pine saw fly Neodiprion sertifer or of Autogragha californica or of H. virescens. Bacteria known to be insecticidal agents, include but are not limited to Bacillus thuringiensis, Bacillus Sphaericus, Bacillus Popilliae and Bacillus Cereus may also be encapsulated. Examples of possible nematodes include Neoaplectana carpoeapsae, Octomyomermis muspratti, Steinemema carpocapsae and Romanomermis culiciuora. Examples of possible fungi include Verticillium lecanii and Entomophthora genus. Chemical toxins include but are not limited to pyrethrum, a naturally derived insecticide; pyrethroids i.e. synthetic copies of pyrethrum, such as allethrin, cyfluthrin. cypermethrin, fenothrin, flucythrinate or indothrin; and organophosphates, such as crufomate, dursban, dicrotophos, parathion or phorate.

Any lignosulfonate, sulfonated lignite, sulfonated tannin or related compound such as naphthalene sulfonates or condensed naphthalene sulfonates or condensed naphthalene sulfonates can be used as a UV protectant in the invention. These compounds are well known and are derived from the sulfite pulping of wood, by sulfonation of lignins derived from the kraft pulping of wood, by sulfonation of tannins derived from wood barks, etc. The lignin materials used are typically in the salt form (i.e. sodium, potassium, etc.). Preferable materials are those with high molecular weight, strong absorptivities in the 290-400 nm wavelength range and sufficient sulfonation to ensure reaction with the proteins leg., gelatin, enzymes, etc.).

The lignosulfonates which may be utilized as the UV protectant materials in the practice of and to obtain the novel protein/UV protectant complex of the present invention are the treated or untreated spent sulfite liquors containing the desired effluent lignosulfonate solids obtained from wood conversion as the sulfite waste pulping liquor. These, as indicated, may be utilized in the "as is" or whole liquor condition. They may also be utilized as a purified lignosulfonate material from, or in which the sugars and other saccharide constituents have been removed and/or destroyed, or additionally inorganic constituents have been partially or fully eliminated. Also sulfonated or sulfoalkylated kraft lignin can be used as an adequate UV protectant material.

As used herein, the term "kraft lignin" has its normal connotation, and refers to the substance which is typically recovered from alkaline pulping black liquors such as are produced in the kraft, soda and other well known alkaline pulping operations. The term "sulfonated lignin", as used in the specification refers to the product which is obtained by the introduction of sulfonic acid groups into the kraft lignin molecule, as may be accomplished by reaction of the kraft lignin with sulfite or bisulfite compounds, so that kraft lignin is rendered soluble in water. As used herein, the term "sulfite lignin" refers to the reaction product Of lignin which is inherently obtained during the sulfite pulping of wood, and is a principle constituent of spent sulfite liquor. The term "lignosulfonate" (LSO₃) encompasses not only the sulfite lignin, but also the sulfonated lignin herein above described. Any type of lignosulfonate that is hardwood, softwood, crude, or pure may be employed. Preferably, lignosulfonates in their as is or whole liquor condition are employed. For example calcium lignosulfonates, sodium lignosulfonates, ammonium lignosulfonates, modified lignosulfonates and mixtures or blends thereof may all be utilized herein. Lignosulfonates are available from numerous sources in either aqueous solution or dried powder forms. For example Lignotech USA, Inc. sells lignosulfonates under the trade designations Lignosol, Norlig, and Marasperse which are appropriate for use in the present invention.

As noted previously, napthalene sulfonates or condensed naphthalene sulfonates may also be used as the UV protectant. Naphthalene sulfonates are well known, and are typically synthesized via sulfonation of napthalene, and napthalene condensates.

A number of proteins can be used along with the UV protectant to form the capsule wall. Proteins such as an albumin, agar-agar, algen, gluten, casein, fibrin or gelatin may be used as the protein source. The preferred protein is gelatin with high bloom strengths as they give the strongest capsule walls.

In the invention, the UV protectant and gelatin are dissolved in a neutral to weak alkaline solution to prevent reaction. An agriculturally active compound (e.g., an active chemical or biological pesticide such as a herbicide, insecticide, etc.) is then dispersed in or emulsified into the mixture using standard dispersion/emulsification methods.

The pH of the resulting dispersion or emulsion is slowly lowered to between 6.5 and 8.0 by addition of dilute acid. Acids such as hydrochloric acid (HCL), sulfuric acid (H₂SO₄), nitric acid (HNO₃), phosphoric acid (H₃PO₄) or acetic acid (CH₃COOH), may be used to adjust the pH of the emulsion. When the pH reaches the isoelectric point of the gelatin, positively charged groups capable of reacting with negative charge groups on the UV protectant are generated. Coacervation occurs resulting in capsule formation. If pH adjustment is desired, caustic (NaOH) can be used to netralize the resulting mixture. Formaldehyde can also be added to harden (i.e., crosslink) the capsule wall material. Other potential crosslinking agents in addition to formaldehyde include acetaldehyde, glyceraldehyde, malonic acid dialdehyde and glyoxal.

By varying the ratio of protectant and gelatin, the amount of protectant introduced into the capsule wall can be varied. Capsule wall thickness can be controlled by the addition rate of acid during coacervation. Coacervation can also be effected by adding to the emulsion formed in steps 1 and 2 a salt solution using salts such as Na₂SO₄ (sodium sulfate), sodium citrate, sodium tartrate, sodium acetate or NaCl (sodium chloride). Reference is made to U.S. Patent 2,800,458 which describes this technique.

### Example I

This example illustrates the general procedure for producing an encapsulated agricultural active. One gram of high bloom gelatin was dissolved in 95 grams of 40°C distilled water. Two grams of sulfonated lignin (Lignosol SFX-65) was added to the gelatin solution and the pH of the resulting mixture was adjusted to pH 6.5 with 0.1N HCl. Twenty grams of technical parathion was emusified into the lignin gelatin solution using a high shear mixer. While maintaining 40°C with stirring, the pH of the parathion emulsion was lowered to pH 5.0 by further addition of 0.1N HCl. The mixture was then poured slowly into 300 grams of water containing 10 grams of 37% formadehyde chilled in an ice bath. The mixture was allowed to stir for 15 minutes and the pH was adjusted to 6.5 with 0.5N NaOH.

### Example II

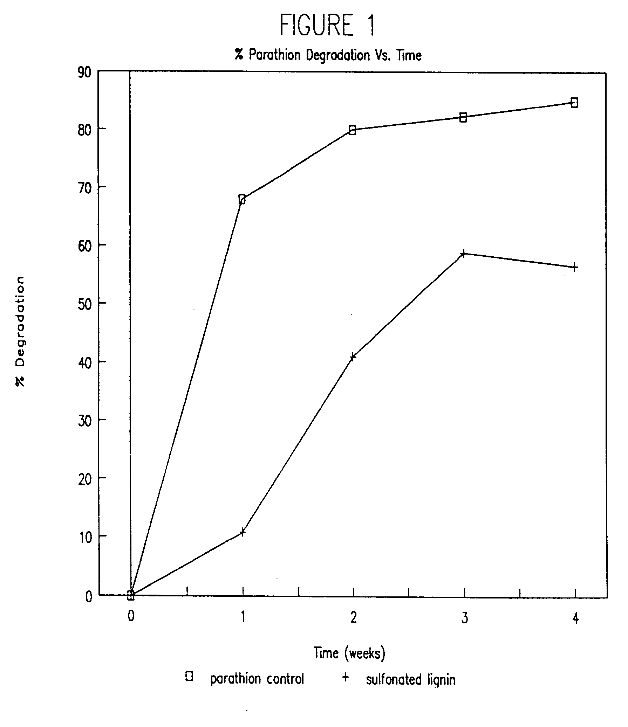

This example illustrates the UV protection imparted by the invention. Samples of parathion encapsulated according the procedure described in Example I were sprayed onto microscope slides. The slides were allowed to dry and suspended equi-distant from the light source in a light box. A lamp which produced a spectrum similar to that of natural sunlight was used in the experiment. After certain time intervals, the slides were removed and the samples were analyzed for remaining parathion content. Control samples containing technical parathion only were run concurrently with the samples. The results obtained indicated that degradation resulting from exposure to simulated sunlight was significantly less in the encapsulated samples with greater than 50% actives still available after four weeks of continuous exposure (See Fig. 1).

### Example III

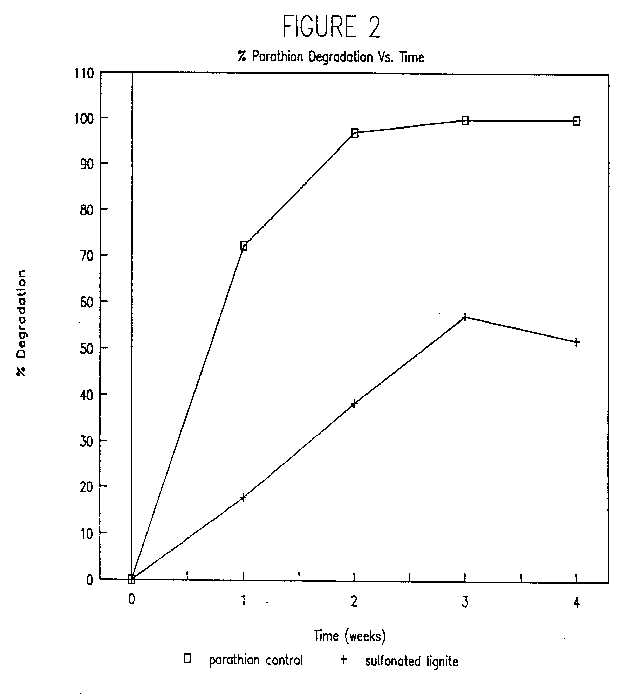

This example illustrates the effectiveness of a sulfonated lignite protectant. Technical parathion was encapsulated with a combination of a sulfonated lignite and high bloom gelatin as described in Example I and exposed to simulated sunlight as described in Example II. Analysis of the resulting exposed samples indicated UV protection similar to that obtained with sulfonated lignin (See Fig. 2).

### Example IV

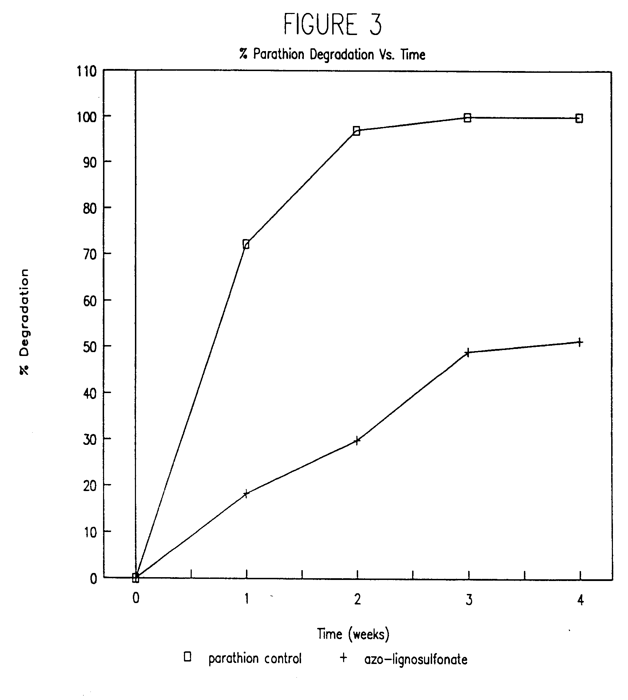

This example illustrates the superior effectiveness of an azo-lignosulfonate protectant. An azo-lignosulfonate was prepared from Marasperse CBOS-6 a sulfonated lignin product available from Lignotech USA, Inc. and p-aminobenzoic acid using the methods described in U.S. Patent No. 4,846,888. Technical parathion was encapsulated with a combination of a this azo-lignosulfonate and high bloom gelatin as described in Example I and exposed to simulated sunlight as described in Example II. Analysis of the resulting exposed samples indicated UV protection greater than that obtained with either sulfonated lignin or sulfonated lignite (See Fig. 3).

### Example V

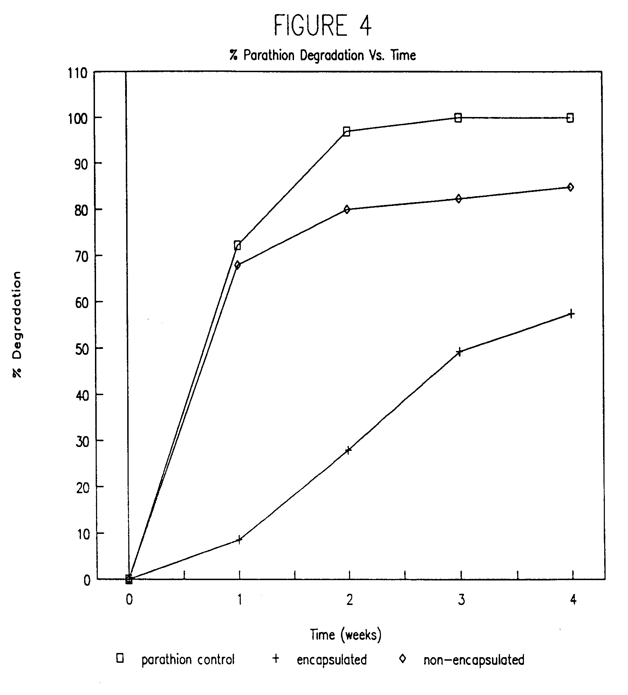

This example illustrates the superior effectiveness of encapsulation over addition of lignosulfonate only. Technical parathion was encapsulated with a combination of a sulfonated lignin (Marasperse CBA-1) and high bloom gelatin as described in Example I and exposed to simulated sunlight as described in Example II. Analysis of the resulting exposed samples indicated UV protection much greater than that obtained using an emulsified parathion non-encapsulated formulation containing an equal amount of Marasperse CBA-1 (See Fig. 4).

## Claims

1. A method for encapsulating an ultra-violet sensitive agriculturally active pesticide in protective capsule wall, comprising the steps of:
i. dissolving a protein and an ultra-violet protectant lignosulfonate, sulfonate lignite, sulfonated tannin, naphthalene sulfonate, condensed naphthalene sulfonate and/or azolignosulfonate, the ultra-violet protectant being in a solution having a pH of 6.0 to 8.5;
ii. mixing a pesticide in said solution to form an emulsion;
iii. acidifying the resulting emulsion to a pH close to the isoelectric point of the protein by controlled addition of acid to form a coacervated mixture containing a protein/ultra-violet protectant complex as a capsule wall;
iv. transferring the coacervated mixture to a chilled water bath and
v. isolating said capsules.

2. A method as claimed in claim 1 which further includes the step of hardening the capsule wall prior to isolating said capsules.

3. A method as claimed in claim 2, wherein the step of hardening comprises adding a crosslinking agent to said chilled water bath, which crosslinking agent is preferably one or more of formaldehyde, acetaldehyde, glyceraldehyde, malonic acid dialdehyde and/or glyoxal.

4. A method as claimed in any of claims 1 to 3, wherein the step of isolating said capsules comprises filtration.

5. A method as claimed in any of claims 1 to 4, which further includes the step of neutralising said coacervated mixture prior to isolating said capsules.

6. A method as claimed in claim 1, wherein the pesticide is one of a synthetically prepared pesticide, a naturally derived pesticide, and a biologically derived pesticide.

7. A method as claimed in claim 6 wherein the pesticide is one of:
- a pyrethroid, and preferably is selected from allethrin, cyfluthrin, cypermethrin, fenothrin, flucythrinate and indothrin;
- an organophosphonate, and preferably is selected from crufomate, dursban, dicrotophos, parathion and phorate;
- pyrethrum; and
- one or more of a virus, a bacterium, a nematode and/or a fungi, and preferably is a nuclear polyhedrosis virus and is selected from *Heliothis zea, H. virescens, Lymantrai dispar, Orgai pseudotsufata, Neodiprion sertifer,* and *Autographa californica*, or is selected from *Bacillus cereus*, or is selected from *Neoaplectana carpocapsae*, *Octomyomermis muspratti*, S*teinemema carpocapsae* and *Romanomermis culiciuora*, or is selected from the group consisting of *Verticillium lecanii* and *Entomophthora* genus.

8. A method as claimed in any of the preceding claims, wherein the protein is one or more of albumin, agar-agar, algen, gluten, casein, fibrin and/or gelatin.

9. A method as claimed in any of the preceding claims wherein the ultra-violet protectant is modified to have increased ultra-violet absorbence in the 290-400nm range.

## Patentansprüche

1. Verfahren zur Einkapselung eines gegen Ultraviolettstrahlung empfindlichen landwirtschaftlich aktiven Pestizids in eine Schutzkapselwand, bei dem:
i. ein Protein und ein gegen Ultraviolettstrahlung schützendes Lignosulfonat, sulfoniertes Lignit, sulfoniertes Tannin, Naphthalinsulfonat, kondensiertes Naphthalinsulfonat und/oder Azolignosulfonat gelöst werden, wobei das Ultraviolett-Schutzmittel in einer Lösung mit einen pH-Wert von 6,0 bis 8,5 vorliegt,
ii. ein Pestizid in diese Lösung eingemischt wird, um eine Emulsion zu bilden,
iii. die resultierende Emulsion auf einen pH-Wert nahe dem isoelektrischen Punkt des Proteins durch kontrollierte Zugabe von Säure angesäuert wird, um eine koazervatierte Mischung zu bilden, die einen Protein/Ultraviolett-Schutzmittel-Komplex als Kapselwand enthält,
iv. die koazervatierte Mischung in ein gekühltes Wasserbad überführt wird und
v. die Kapseln isoliert werden.

2. Verfahren nach Anspruch 1, das ferner den Schritt der Härtung der Kapselwand vor der Isolierung der Kapseln umfaßt.

3. Verfahren nach Anspruch 2, bei dem der Schritt des Härtens die Zugabe eines Vernetzungsmittels zu dem gekühlten Wasserbad umfaßt, wobei das Vernetzungsmittel vorzugsweise eines oder mehrere von Formaldehyd, Acetaldehyd, Glycerinaldehyd, Malonsäuredialdehyd und/oder Glyoxal ist.

4. Verfahren nach einem der Ansprüche 1 bis 3, bei dem der Schritt der Isolierung der Kapseln Filtration umfaßt.

5. Verfahren nach einem der Ansprüche 1 bis 4, das ferner den Schritt der Neutralisierung der koazervatierten Mischung vor der Isolierung der Kapseln umfaßt.

6. Verfahren nach Anspruch 1, bei dem das Pestizid eines von einem synthetisch hergestellten Pestizid, einem von der Natur abgeleiteten Pestizid und einem biologisch erhaltenen Pestizid ist.

7. Verfahren nach Anspruch 6, bei dem das Pestizid eines von:
- einem Pyrethroid und vorzugsweise ausgewählt aus Allethrin, Cyfluthrin, Cypermethrin, Fenothrin, Flucythrinat und Indothrin ist,
- einem organophosphonat und vorzugsweise ausgewählt aus Crufomat, Dursban, Dicrotophos, Parathion und Phorat ist,
- Pyrethrum und
- einem oder mehreren von einem Virus, einem Bakterium, einer Nematode und/oder einem Pilz ist und vorzugsweise ein nuklear Polyhedrosis-Virus ist und ausgewählt ist aus *Heliothis zea*, *H*. *virescens*, *Lymantrai dispar*, *Orgai pseudotsufata, Neodiprion sertifer*, und *Autographa californica*, oder ausgewählt ist aus *Bacillus cereus*, oder ausgewählt ist aus *Neoaplectana carpocap*sae, *Octomyomermis muspratti*, *Steinemema carpocapsae* und *Romanomermis culiciuora*, oder ausgewählt ist aus der Gruppe bestehend aus *Verticillium lecanii* und *Entomophthora genus.*

8. Verfahren nach einem der vorhergehenden Ansprüche. bei dem das Protein eines oder mehrere von Albumin, Agar-Agar, Algen, Gluten, Casein, Fibrin und/oder Gelatine ist.

9. Verfahren nach einem der vorhergehenden Ansprüche, bei dem das Ultraviolett-Schutzmittel modifiziert ist, so daß es erhöhte Ultraviolett-Absorption im 290 bis 400 nm Bereich aufweist.

## Revendications

1. Procédé pour encapsuler un pesticide sensible aux ultra-violets, actif dans l'agriculture, dans une paroi de capsule protectrice, comprenant les étapes de
i) dissoudre une protéine et un agent de protection contre les ultra-violets qui est un lignosulfonate, une lignite sulfonée, un tanin sulfoné, un sulfonate de naphtalène, un azolignosulfonate et/ou un sulfonate de naphtalène condensé, l'agent de protection contre les ultra-violets étant dans une solution ayant un pH de 6,0 à 8,5;
ii) mélanger un pesticide dans cette solution pour former une émulsion;
iii) acidifier l'émulsion résultante jusqu'à un pH proche du point isoélectrique de la protéine par addition commandée d'acide pour former un mélange coacervé contenant un complexe protéine/protecteur contre les ultra-violets en tant que paroi de capsule;
iv) transférer le mélange coacervé dans un bain d'eau refroidi et
v) isoler lesdites capsules.

2. Procédé selon la revendication 1 comprenant en outre l'étape consistant à durcir la paroi de capsule avant d'isoler lesdites capsules.

3. Procédé selon la revendication 2, dans lequel l'étape de durcissement comprend : ajouter au bain d'eau refroidi, un agent de réticulation qui est de préférence un ou plusieurs de : formaldéhyde, acétaldéhyde, glycéraldéhyde, dialdéhyde d'acide malonique; et/ou glyoxal.

4. Procédé selon l'une des revendications 1 à 3, dans lequel l'étape d'isolation des capsules comprend une filtration.

5. Procédé selon l'une quelconque des revendications 1 à 4, comprenant en outre l'étape de neutraliser le mélange coacervé avant d'isoler lesdites capsules.

6. Procédé selon la revendication 1, dans lequel le pesticide est l'un des suivants : un pesticide préparé synthétiquement, un pesticide dérivé de la nature; et un pesticide obtenu par voie biologique.

7. Procédé selon la revendication 6, dans lequel le pesticide est l'un des suivants :
- un pyrétroïde, choisi de préférence parmi l'allétrine, la cyflutrine, la cypermétrine, la fénotrine, le flucytrinate et l'indotrine;
- un organophosphonate, de préférence choisi parmi : crufomate, dursban, dicrotophos, parathion et phorate;
- le pyréthrum; et
- un ou plusieurs d'un virus, une bactérie, un nématode et/ou un fonge, et est de préférence un virus polyédrosis nucléaire, et est choisi parmi Heliothis zea, H. virescens, Lymantrai dispar, Orgai pseudotsufata, Neodiprion sertifer, et Autographa californica, ou est choisi parmi Bacillus cereus, ou est choisi parmi Neoaplectana carpocapsae, Octomyomermis muspratti, Steinemema carpocapsae et Romanomermis culiciuora, ou est choisi dans le groupe constitué de Verticillium lecanii et Entomophthora genus.

8. Procédé selon l'une quelconque des revendications précédentes, dans lequel la protéine est une ou plusieurs de : albumine, agar-agar, algène, glutène, caséine, fibrine et/ou gélatine.

9. Procédé selon l'une quelconque des revendications précédentes, dans lequel l'agent protecteur contre les ultra-violets est modifié pour avoir une absorbance ultra-violette accrue dans la gamme 290-400nm.
